# EUROPEAN PATENT APPLICATION

(11) **EP 4 603 371 A1**
(43) Date of publication of application: **20.08.2025**
(21) Application number: 24157395.5
(22) Date of filing: 13.02.2024
(51) Int. Cl.: B62D 35/00, B62D 35/02, B62D 37/02

(54) **ACTIVE REAR DIFFUSOR FOR A ROAD VEHICLE, ASSEMBLY AND ROAD VEHICLE**

(71) Applicant: Wuhan Lotus Cars Co., Ltd., Wuhan, Hubei (CN)
(72) Inventor: Wiech, Thomas, 64295 Darmstadt (DE); Neumann, Alexander, 64579 Gernsheim (DE)
(74) Representative: Elzaburu S.L.P.

(57) **Abstract**

The invention concerns an active rear diffusor (10) for a road vehicle (2), the rear diffusor (10) comprising:
- a first air guiding member (12) and at least a second air guiding member (14),
- an actuating assembly (17),

wherein at least a section of the first air guiding member (12) and of the second air guiding member (14) are arranged successively along a longitudinal axis (A) of the road vehicle (2), wherein the actuating assembly (17) is configured to move each of the first and second air guiding member (14) into a first position in which the rear diffusor (10) assumes a first operating state and into a second position in which the rear diffusor (10) assumes a second operating state,
and wherein a width of a first gap (34) between the first and second air guiding member (12, 14) is smaller in in the first operating state compared to the second operating state. The invention also concerns an assembly (100) and a road vehicle (2).

## Description

The invention concerns an active rear diffusor for a road vehicle, an assembly for configuring such an active rear diffusor and a road vehicle. The road vehicle may in particular be a car, a truck or a bus.

### Background

Rear diffusors are established in road vehicles and e.g. help to generate downforces for enhancing traction. Active rear diffusors may have different operating states that are marked by different aerodynamic characteristics. Active rear diffusors typically comprise a movable air guiding member, e.g. a wing or an airfoil. They typically also comprise an actuator to move said air guiding member so as to provide the different operating states of the rear diffusor. An example can be found in FR 3 072 640 A1.

Even though, existing active rear diffusors help to improve the aerodynamic characteristics of road vehicles, there is still need for improvement.

### Summary of the invention

It is therefore an object of this disclosure to provide an active rear diffusor that helps to further improve the operation of a road vehicle.

This object is solved by the subject-matters of the independent claims. Advantageous embodiments are defined in the dependent claims, in this description and in the figures.

Accordingly, an active rear diffusor for a road vehicle is suggested or, put briefly, a rear diffusor for a vehicle. The rear diffusor comprises:
- a first air guiding member and at least a second air guiding member,
- an actuating assembly,

wherein at least a section of the first air guiding member and of the second air guiding member are arranged successively along a longitudinal axis of the road vehicle,
wherein the actuating assembly is configured to move each of the first and second air guiding members into a first position in which the rear diffusor assumes a first operating state and into a second position in which the rear diffusor assumes a second operating state,
and wherein a width of a first gap - the width e.g. being measured along the longitudinal axis - between the first and second air guiding members is smaller (e.g. non-existent) in the first operating state compared to the second operating state.

This active rear diffusor is marked by an increased capability and in particular by enhanced degrees of freedom for adjusting its aerodynamic characteristics to different operational states of the road vehicle. This may help to improve operation of the road vehicle in its different operational states, e.g. in terms of traction and aerodynamic drag.

The active rear diffusor may be active in a sense of being actively movable by the actuating assembly. Any references to the rear diffusor being moved may correspond to the first and/or second air guiding member being moved. For example, the first and second air guiding members may be driven by the actuating assembly to move according to any of the examples disclosed herein, this defining an active characteristic of the rear diffusor. The first and second air guiding members may be simultaneously movable.

In one example, the rear diffusor is not manually movable and/or no manual forces may be required for providing any of the disclosed movements. It may be provided, however, that the active rear diffusor is movable under user control, e.g. due to user inputs being possible which control movements of the rear diffusor. Nonetheless, in one example the rear diffusor is autonomously and/or automatically movable, e.g. depending on at least one operating parameter of the vehicle. The operating parameter may e.g. be a travelling speed and/or a drive mode of the vehicle. The drive mode may comprise a pre-setting of certain vehicle parameters to e.g. adjust driving characteristics in a desired manner and/or to improve fuel economy.

The first and second air guiding members may also be referred to as a first and second wing or as a first and second air foil.

The first and second air guiding members may each have a width dimension extending along a width of the vehicle. The width dimension of the first and second air guiding member may be identical or may not differ by more than 20 % from one another. This may help to improve compactness while still enabling controllability of the aerodynamic characteristics of the rear diffusor.

The first and second air guiding members may have an extension along the longitudinal axis, wherein this extension may in particular be measured when assuming the first operating state. This axial extension of the first and second air guiding members may be identical, but may also be different from one another. For example, the first air guiding member which may be positioned ahead of the second air guiding member may be axially longer. This takes into account that the first air guiding member may have a stronger impact in terms of guiding the airflow.

The first air guiding member may be positioned closer to a front of the vehicle compared to the second guiding member. The first air guiding member may be positioned adjacent and/or opposite to a part of the vehicle's underbody, a part of the vehicle's rear end or a part of the vehicle's lower surface (e.g. opposite when viewed along the longitudinal axis). In particular, the first air guiding member may be positioned adjacent and/or opposite to a rear edge of and/or a step in the underbody. The underbody may, at least in a region adjacent and/opposite to the first air guiding member, be substantially planar and/or flat. In one example, the underbody is substantially horizontal in a region adjacent and/opposite to the first air guiding member.

The longitudinal axis may correspond or extend in parallel to a longitudinal axis of the vehicle. A forward driving direction may extend along the longitudinal axis. The longitudinal axis may correspond to a main axis of an airflow along an underbody of the vehicle, said airflow occurring when driving forward. This airflow may correspond to a headwind or, put differently, to an airstream relative to and/or resulting from a motion of the vehicle.

In one example, the first and second air guiding members have no overlapping portions along the longitudinal axis. This may be valid for any or both of the first and second operating states. Accordingly, in one example the entire first air guiding member may be positioned axially ahead of the second air guiding member, e.g. when viewed from a front of the vehicle. In another example, an axial overlap between the first and second guiding member may occur at most in the first operating state, e.g. to provide a reliable and complete closing of the gaps formed in the second operating state.

In case of such axial overlaps, portions of both of the first and second air guiding members may remain that are still arranged successively along the longitudinal axis. It may be provided that these potions are significantly larger (e.g. in terms of surface area and/or axial length) than any possibly overlapping portions, e.g. at least twice as large. This may help to define a sufficiently large outer surface of the rear diffusor while still enabling a reliable closing of the gaps.

Operating states of the rear diffusor may not be limited to the first and second operating state. Additional operating states may be provided. Any operating state may be marked by a defined position of each of the first and second air guiding member, in particularby a position that is different from the first and second position. The first and second air guiding members may be movable between any of their positions in discrete steps and/or steplessly.

According to a further embodiment, the actuating assembly is configured to, in particular autonomously and/or automatically, move each of the first and second air guiding member into the first position at a first vehicle speed and into the second position at a second vehicle speed, wherein the first vehicle speed is lower than the second vehicle speed. This enables adjusting the aerodynamic characteristics of the rear diffusor to the vehicle speed, such as an aerodynamic drag and/or a generated downforce. For example, at the lower first vehicle speed, it may be preferable to reduce aerodynamic drag at the costs of a downforce that is producible by the rear diffusor. At the higher second vehicle speed, it may be preferable to increase downforces at the costs of aerodynamic drag. The rear diffusor disclosed herein may generally be configured to provide such adjustments by switching between its first and second operating state in a speed-dependent manner.

According to a further embodiment, in the first operating state the width of the first gap between the first air guiding member and the second air guiding member is less than 5 cm and is in particular 0 cm. In the latter case, the first gap may be fully closed and the first and second air guiding members may contact one another. Generally, the first gap and also second gap mentioned below may extend along a complete width of the first and/or second air guiding member.

The width of the first gap and/or second gap mentioned below may be measured orthogonally to the width of the first and/or second air guiding member, see the above discussion of width dimensions of said air guiding members. Additionally or alternatively, the widths of the first gap and/or second gap may be measured along the longitudinal axis, in particular when assuming the first operating state. Additionally or alternatively, the widths of the first gap and/or second gap may be measured along a horizontal axis, in particular when assuming the first operating state.

By providing a respectively limited width of the first gap, an amount of air entering in between the first and second air guiding members may deliberately be reduced. In particular, this may deliberately reduce an amount of air that changes - by streaming through said first gap - from streaming along an outer portion of the rear diffusor facing a road surface to an inner portion of the rear diffusor that e.g. faces the vehicle. This may help to reduce aerodynamic drag. On the other hand, by deliberately increasing and/or opening the first gap in the second operating state, the downforce that is generated by the rear diffusor may deliberately be increased, e.g. to improve traction.

According to a further embodiment a width of a second gap between the first air guiding member and an - in particular axially - adjacent portion of the road vehicle is smaller in the first operating state than in the second operating state and is e.g. zero. Accordingly, the second gap may be fully closed in the first operating state, but may be opened to a larger degree in the second operating state. For example, in the first operating state the width of the second gap is less than 5 cm and is in particular 0 cm. The adjacent portion of the vehicle may e.g. be a rear end of the underbody or any other vehicle portion that is axially opposite to an axially outer edge of the first air guiding member.

Reducing or fully closing the second gap in the first operating state may deliberately reduce or prevent an airstream along an inner side of the rear diffusor. This way, aerodynamic drag can be reduced. In the second operating state, to the contrary, the second gap may be enlarged to deliberately increase the amount of air that streams along said inner side. This may help to increase a downforce that is generated by the rear diffusor.

A further embodiment combines the formations and in particular dimensions of the first and second gap according to any of the examples disclosed herein. Accordingly, in the second operating state deliberately large first and second gaps may be provided. In the first operating state, to the contrary, the first and second gap may be deliberately reduced and may e.g. be closed. This helps to reduce aerodynamic drag to a particular significant extent. In the second operating state, on the other hand, the gaps may provide dedicated channels so that the air streaming along the vehicle's underbody towards the rear diffusor may stream along both of an inner side and outer side of the rear diffusor.

Especially by way of the first gaps, air may stream from the inner side of the rear diffusor to the outer side, e.g. after streaming through the second gap first. This way, air may stream along both sides of the first and second air guiding members. This helps to limit a risk of stalling and thus allows for enlarging the angles of attack of the first and/or second air guiding members to correspondingly increase a generated downforce.

According to a further embodiment the first air guiding member and the second air guiding member define an outer portion (or outer side) of the rear diffusor that faces a road surface and wherein in the first operating state said outer portion has a smaller curvature, e.g. a curvature of zero, compared to the second operating state. For example, in the first operating state, the outer portion is substantially planar and/or is curved similarly to or in accordance with an adjacent portion of the road vehicle's underbody. Again, this may help to reduce dynamic drag in the first operating state.

According to a further embodiment, in the first operating state an angle of the first air guiding member relative to the road surface and/or of the second air guiding member relative to the road surface is smaller compared to the second operating state. Accordingly, the first and second air guiding members may e.g. extend more horizontally in the first operating state compared to the second operating state. This may allow for orienting the first and second air guiding members similar to the underbody in the first operating state to reduce aerodynamic drag, while tilting them to increase downforces in the second operating state.

The relative angle between the road surface and any of the air guiding members may not result from an actual physical intersection. Such an intersection may not be present. Rather, it may relate to an angle e.g. resulting from virtually elongating the air guiding members so as to intersect the road surface. Alternatively, this angle can be defined by virtually shifting the road surface (or by generally considering a virtual parallel plane) so as to intersect the air guiding members.

In one example, in the first operating state the angle of the first air guiding member relative to the road surface may be similar to the angle of the second air guiding member relative to the road surface. Put differently, the first and second air guarding members may be aligned with one another and/or with an adjacent portion of the vehicle's underbody.

According to a further embodiment, the first air guiding member extends at a first angle relative to the road surface and the second air guiding member extends at a second angle relative to the road surface and a difference between the first and second angle is smaller in the first operating state compared to the second operating state. The first and second angle may be virtually defined as discussed above. This embodiment may include that, in the second operating state, the first and second air guiding members may no longer be aligned with one another. Rather, they may be tilted relative to one another. In particular, they may be oriented at a different angle relative to one another compared to the first operating state. For example, the second air guiding member may be tilted to a larger degree compared to a horizontal plane and/or the road surface than the first air guiding member in the second operating state. Again, this allows for increasing downforces generated in the second operating state.

According to a further embodiment the actuating assembly comprises a linkage assembly and at least one actuator, wherein the linkage assembly couples the first and second air guiding members to the actuator. The linkage assembly may comprise a number of links, e.g. in form of rods and/or of generally stiff members. Also, the linkage assembly may comprise one or more pivot joints or, put differently, pivot bearings. Also, the linkage assembly may comprise links that are pivotally connected to one another. The linkage assembly may generally be configured to move all air guiding members between their respective first and second positions, in particular simultaneously. In one example, the linkage assembly is configured to transmit a driving force or torque that is generated by the actuator and in particular by only one actuator to all air guiding members, in particular simultaneously.

According to a further embodiment the linkage assembly couples the first and the second air guiding member to one another, e.g. by means of a sub-assembly. Again, this subassembly may comprise one or more links and/or one or more pivot joints. This may enable a transmission of a driving force or torque generated by the actuator between the first and the second air guiding member, thereby e.g. avoiding a need for a second actuator for separately driving the second air guiding member. Additionally or alternatively, this may help to guide relative movements between the first and second air guiding members in a defined manner. As a result, a first and/or second gap and/or any of the relative orientations between the first and second air guiding members disclosed herein may be provided.

According to a further embodiment the linkage assembly and in particular the subassembly comprises a pivot joint to which both of the first and the second air guiding member are coupled, e.g. by one respective link. Specifically, the first air guiding member may be coupled to this pivot joint by a first link and the second air guiding member may be coupled to this pivot joint by a second link. No further links may be arranged in between the first and second air guiding members and said common pivot joint. On the other hand, the first and second links may each connect to the first and second air guiding member, respectively, by a pivot joint. The common pivot joint to which both air guiding members are coupled may provide a rotational degree of freedom between the first and second air guiding member, while still allowing for a force or torque transmission in between them.

Accordingly, the first and second air guiding members can adjust their relative orientations when changing between the first and second operating state. This may be beneficial for any of the gap formations and/or for providing any of relative orientations between the first and second air guiding members disclosed herein.

According to a further embodiment the (common) pivot joint is coupled to a pivot bearing that is fixed to the vehicle. This coupling may e.g. be provided by at least one further link of the linkage assembly. It provides a further degree of freedom that assists in orienting the first and second guiding member according to any of the examples disclosed herein.

The invention also concerns an assembly for providing an active rear diffusor of a road vehicle, wherein the assembly comprises:
- a first air guiding member and at least a second air guiding member,
- a linkage assembly coupled to the first air guiding member and to the second air guiding member and configured to be coupled to at least one actuator,

wherein at least a section of the first air guiding member and of the second air guiding member are arrangeable successively along a longitudinal axis of the road vehicle,
wherein each of the first and second air guiding member are movable into a first position in which the rear diffusor assumes a first operating state and into a second position in which the rear diffusor assumes a second operating state,
and wherein a width of a first gap along the longitudinal axis between the first and second air guiding members is smaller in in the first operating state compared to the second operating state.

This assembly may e.g. be connected to an actuator already present in the vehicle. It may e.g. be provided as a spare part for replacing respectively broken components of a rear diffusor.

The invention also concerns a road vehicle comprising an active rear diffusor according to any of the examples disclosed herein.

### Brief description of the Figures

An exemplary embodiment of the invention is discussed below with reference to the Figures. Same features may be marked with same reference signs throughout the Figures.
- Figure 1: shows a rear diffusor according to a first embodiment in a first operational state.
- Figure 2: shows the rear diffusor of Figure 1 in a second operational state.

### Detailed Description

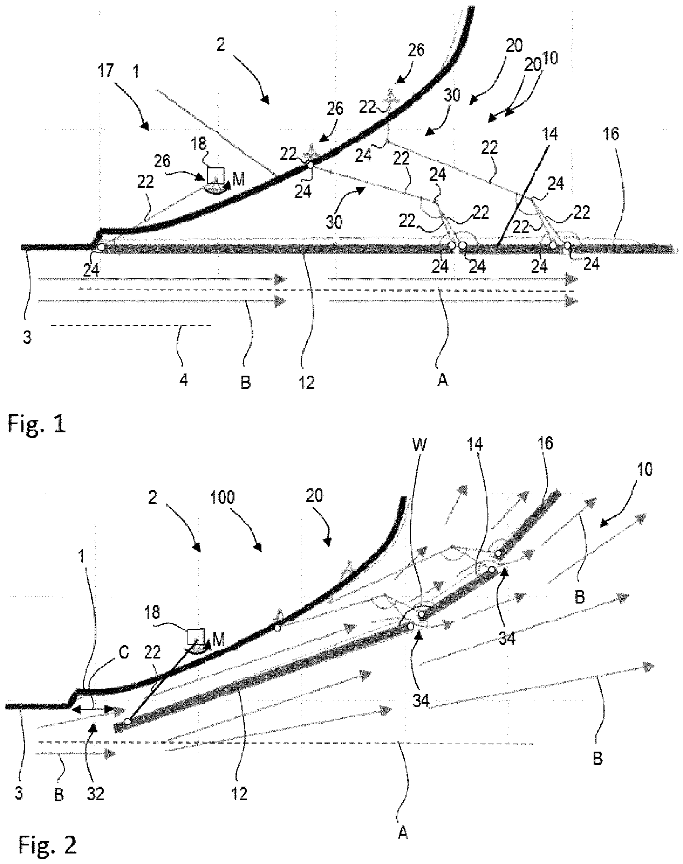

Figure 1 shows part of a rear end section 1 of an otherwise non-illustrated road vehicle 2. The rear end section 1 merges into an underbody 3 of the vehicle 2. The underbody 3 faces a road surface 4 and may in particular extend in parallel thereto. The depicted rear end section 1 is located behind a non-illustrated rear axle of the road vehicle 2 and e.g. comprises or is connected to non-illustrated rear lights and/or a non-illustrated rear bumper. A non-illustrated front end section of the vehicle 2 is positioned to the left in Figure 1. A forward driving direction points to the left in Figure 1.

Generally, the views of Figures 1 and 2 correspond to sectional views, with the sectional plane extending vertically upright and comprising the longitudinal axis A discussed below.

The longitudinal axis A extends horizontally and in parallel to a non-illustrated longitudinal axis of the vehicle 2. When driving in the forward driving direction, air streams along the longitudinal axis A and along the underbody 3 from the left to the right. Specifically, it streams horizontally in between the underbody 3 and the road surface 4. This is indicated by horizontal arrows B in Figure 1, only one of which is marked with a respective reference sign.

The vehicle 2 comprises an active rear diffusor 10. This rear diffusor 10 comprises a first air guiding member 12, a second air guiding member 14 and an optional third air guiding member 16. There may be further air guiding members in other non-illustrated embodiments. Each air guiding member 12, 14, 16 is a flat planar member, but may also have a different shape, in particular a curved shape. Outer surfaces or outer sides of said air guiding members 12, 14, 16 face the road surface 4. Inner surfaces or inner sides of said air guiding members 12, 14, 16 face the vehicle 2 and in particular an outer surface of its rear end section 1.

The air guiding members 12, 14, 16 are sequentially arranged along the longitudinal axis A, wherein the first air guiding member 12 is positioned axially closest to the underbody 3 and/or the non-illustrated front of the vehicle 2. The third air guiding member 16 is positioned the farthest apart from the underbody 3 and from the front of the vehicle 2 when viewed along the longitudinal axis A. The second air guiding member 14 is arranged axially in between the first air guiding member 12 and the third air guiding member 16. There are no axial overlaps between the air guiding members 12, 14, 16. This, however, can optionally be implemented to fully close gaps in between them.

The rear diffusor 10 further comprises a linkage assembly 20. The linkage assembly 20 comprises a plurality of links 22 that are schematically illustrated as being rod-shaped members. This is non-limiting and other configurations of the links 22, e.g. as plate shaped members, are possible, too. The links 22 are connected to each other and to the air guiding members 12, 14, 16 by pivot joints 24.

The linkage assembly 20 also comprises a number of rotation bearings 26 that are fixedly arranged at or in the vehicle 2. One of the rotation bearings 26 is attached to or comprised by an actuator 18, see the rightmost rotation bearing 26 in Figure 1. This rotation bearing 26 is connected to one end of the first air guiding member 12 by a link 22, said link 22 being coupled to the first air guiding member 12 by a pivot joint 24.

The actuator 18 may e.g. be an electric motor. The actuator 18 and the linkage assembly 20 form an actuating assembly 17 for non-manually changing operational states of the rear diffusor 10.

The linkage assembly 20 further comprises two subassemblies 30. Each connect two of the air guiding members 12, 14, 16 to one another and to one of the rotation bearings 26. In the shown example, one subassembly 30 connects the first and second air guiding members 12, 14 to one another and a second subassembly 30 connects the second and third air guiding members 14, 16 to one another. This includes coupling the respectively connected air guiding members 12, 14, 16 to a common pivot joint 24 by respective links 22. This common pivot joint 24 is connected by two further links 22 - which are connected to one another by a further pivot joint 24 - to one of the rotation bearings 26.

The linkage assembly 20 thus provides an at least indirect coupling of all of the air guiding members 12, 14, 16 to one another and to the actuator 18, while also rotatably supporting them at the vehicle 2 via the rotation bearings 26. Also, the linkage assembly 20 defines a kinematic structure that reliably guides movements of the air guiding members 12, 14, 16 in a defined manner by suitably arranging, dimensioning and connecting the respective links 22 and by suitably positioning the pivot joints 24. In this way, a torque M that is generated by the actuator 18 can be converted into a desired movement of the air guiding members 12, 14, 16.

Figure 1 shows a first operational state of the rear diffusor 10 in which the air guiding members 12, 14, 16 each assume a first position. In this operational state, the air guiding members 12, 14, 16 are aligned with one another and with the underbody 3. Accordingly, the air guiding members 12, 14, 16 form a flat horizontal outer portion of the rear diffusor 10 that faces the road surface 4. A non-illustrated angle between the air guiding members 12, 14, 16 thus amounts to 180° and all air guiding members 12, 14, 16 are arranged at an identical angle relative to the longitudinal axis A and road surface 4.

Further, no axial gaps are formed between the air guiding members 12, 14, 16, i.e. adjacent axially outer edges of said air guiding members 12, 14, 16 contact one another. Alternatively, only very small axial gaps may be formed in between the air guiding members 12, 14, 16. The illustration of Figure 1 is schematic and does not actually intend to illustrate a formation of such axial gaps.

Still further, it is meant to be schematically illustrated that the first air guiding member 12 contacts an axially outer edge and in particular a rear area and of the underbody 3. This again means that no axial gap is formed between these members.

As indicated by the extension of the arrows B, air streaming from the front to the rear of the vehicle 2 thus continues to stream along the outer portion of the rear diffusor 10 without being significantly deflected. This reduces aerodynamic drag and is particularly beneficial at low vehicle speeds, e.g. of up to 30 km/h or up to 50 km/h.

Figure 2 shows a second operational state of the rear diffusor 10 in which the air guiding members 12, 14, 16 each assume a second position. Compared to the state of Figure 1, the actuator 18 has generated a torque M and thereby rotated the link 22 directly connected to it and/or to the rightmost rotation bearing 26 away from the underbody 3. Due to the at least indirect coupling of all of the air guiding members 12, 14, 16 to one another via the linkage assembly 20, the rotation of said first link 22 is transmitted to all further links 22 and air guiding members 12, 14, 16. This results in a rotating movement of all of the air guiding members 12, 14, 16. These are rotated in manner so as to be lifted vertically upwards and to be moved axially away from the underbody 3 and/or in a rear direction along the longitudinal axis A.

Compared to Figure 1, it can be seen that in the second operational state the air guiding members 12, 14, 16 are non-horizontal. They are thus arranged at non-illustrated larger non-zero angles relative to the longitudinal axis A and to the non-illustrated road surface 4. These angles differ from one another, with the third air guiding members 16 being arranged at the largest respective angle, the second air guiding member 14 being arranged at the second largest respective angle and the first air guiding member 12 being arranged at the smallest respective angle. Put differently, the first air guiding member 12 is tilted to a lesser extent relative to the road surface 4 and longitudinal axis A compared to the second third air guiding members 14, 16. An outer portion or outer face of the rear diffusor 20 is thus non-planar and curved to a larger extent compared to the first operational state.

Also, in the second operational state the air guiding members 12, 14, 16 are arranged at an angle W below 180° relative to one another and are no longer aligned. One of these angles W is indicated between the first and second air guiding members 12, 14 in Figure 2.

The movement for changing from the first to the second operational state results in a gap 32 being formed between an axial rear end of the underbody 3 and the first air guiding member 12. An axial width C of this gap 32 is schematically indicated and amounts to several centimetres, in particular to more than 5 cm. In the shown example, this width is measured along the longitudinal axis A. Moreover, gaps 34 are formed between each of the adjacent first and second air guiding members 12, 14 as well as the second and third air guiding members 14, 16.

As indicated by arrows B in Figure 1, the air that streams axially along the underbody 3 thus streams along both of the inner and outer faces of the rear diffusor 10 and specifically of its air guiding members 12, 14, 16. For example, a part of the air streaming along the underbody 3 flows through the gap 32 and along the inner side of the air guiding members 12, 14, 16. Compared to Figure 1, the airflow is thus more rapidly expanded and in particular diverted compared to the state of streaming along the underbody 3. This promotes a generation of downforces.

As further illustrated in Figure 2, the air can also flow through the gaps 34 formed between the air guiding members 12, 14,16. It has been found that this allows for increasing an angle of attack of in particular the second and third air guiding members 14, 16 without stalling. This further increases the potential to generate downforces.

The second operational state is particularly suitable for higher velocities compared to the first operational state, e.g. for travelling speeds above 30 km/h or above 50 km/h. The actuator 18 can be controlled to selectively change between the first and second operational states depending on the travelling speed of the vehicle 2. For example, if a respective speed threshold is exceeded e.g. at least for a certain minimum time, the rear diffusor 10 changes from the first operational state of Figure 1 to the second operational state of Figure 2. On the other hand, if said speed threshold is fallen below of, e.g. at least for certain minimum time, the rear diffusor 10 changes from the second operational state of Figure 2 to the first operational state of Figure 1. This way, the aerodynamic characteristics of the rear diffusor 10 can be switched between reducing aerodynamic drag (first operational state) to increasing downforces (second operational state) depending on a current driving speed of the vehicle. In the depicted embodiment, the air guiding members 12, 14, 16 and the linkage assembly 20 form an example of an assembly 100 according to this disclosure.

## Claims

1. Active rear diffusor (10) for a road vehicle (2),
the rear diffusor (10) comprising:
- a first air guiding member (12) and at least a second air guiding member (14),
- an actuating assembly (17),
wherein at least a section of the first air guiding member (12) and of the second air guiding member (14) are arranged successively along a longitudinal axis (A) of the road vehicle (2), wherein the actuating assembly (17) is configured to move each of the first and second air guiding member (14) into a first position in which the rear diffusor (10) assumes a first operating state and into a second position in which the rear diffusor (10) assumes a second operating state,
and wherein a width of a first gap (34) between the first and second air guiding members (12, 14) is smaller in the first operating state compared to the second operating state.

2. The active rear diffusor (10) of claim 1,
wherein the actuating assembly (17) is configured to move each of the first and second air guiding member (12, 14) into the first position at a first vehicle speed and into the second position at a second vehicle speed, wherein the first vehicle speed is lower than the second vehicle speed.

3. The active rear diffusor (10) of any of the previous claims,
wherein in the first operating state, the width of the first gap (34) is less than 5 cm and is in particular 0 cm.

4. The active rear diffusor (10) of any of the previous claims,
wherein a width of a second gap (32) between the first air guiding member (12) and an adjacent portion of the road vehicle (2) is smaller in the first operating state than in the second operating state.

5. The active rear diffusor (10) of claim 4,
wherein in the first operating state the width of the second gap (32) is less than 5 cm and is in particular 0 cm.

6. The active rear diffusor (10) of any of the previous claims,
wherein the first air guiding member (12) and the second air guiding member (14) define an outer portion of the rear diffusor (10) that faces a road surface (4) and wherein in the first operating state said outer portion has a smaller curvature compared to the second operating state.

7. The active rear diffusor (10) of claim 6,
wherein in the first operating state, the outer portion is substantially planar and/or is curved similarly to an adjacent portion of an underbody (3) of the road vehicle (2).

8. The active rear diffusor (10) of any of the previous claims,
wherein in the first operating state an angle of the first air guiding member (12) relative to a road surface (4) and/or of the second air guiding member (14) relative to the road surface (4) is smaller compared to the second operating state.

9. The active rear diffusor (10) of any of the previous claims,
wherein the first air guiding member (12) extends at a first angle relative to a road surface (4) and the second air guiding member (14) extends at a second angle relative to the road surface (4) and a difference between the first angle and the second angle is smaller in the first operating state compared to the second operating state.

10. The active rear diffusor (10) of any of the previous claims,
wherein the actuating assembly (17) comprises a linkage assembly (20) and at least one actuator (18), wherein the linkage assembly (20) couples the first and second air guiding members (12, 14) to the actuator (17).

11. The active rear diffusor (10) of claim 10,
wherein the linkage assembly (20) couples the first and the second air guiding member (14) to one another.

12. The active rear diffusor (10) of any of the claim 11,
wherein linkage assembly (20) comprises a pivot joint (24) to which both of the first and the second air guiding member (12, 14) are coupled, in particular by way of a respectively associated link (22).

13. The active rear diffusor (10) of any of the claim 12,
wherein the pivot joint (24) is coupled to a pivot bearing (26) that is fixed to the vehicle (2).

14. Assembly (100) for providing an active rear diffusor (10) of a road vehicle (2),
wherein the assembly (100) comprises:
- a first air guiding member (12) and at least a second air guiding member (14),
- a linkage assembly (20) coupled to the first air guiding member (12) and second air guiding member (14) and configured to be coupled to at least one actuator (18),
wherein at least a section of the first air guiding member (12) and of the second air guiding member (14) are arrangeable successively along a longitudinal axis (A) of the road vehicle (2), wherein each of the first and second air guiding member (12, 14) are movable into a first position in which the rear diffusor (10) assumes a first operating state and into a second position in which the rear diffusor (10) assumes a second operating state,
and wherein a width of a first gap (34) between the first and second air guiding members (12, 14) is smaller in in the first operating state compared to the second operating state.

15. A road vehicle (2),
comprising an active rear diffusor (10) according to any of claims 1-13.
